# EUROPÄISCHE PATENTANMELDUNG

(11) **EP 0 885 579 A1**
(43) Veröffentlichungstag der Anmeldung: **23.12.1998**
(21) Anmeldenummer: 98110147.0
(22) Anmeldetag: 04.06.1998
(51) Int. Cl.: A47J 27/21

(54) **Wandungselement**

(30) Priorität: 16.06.1997 DE 29710464 U
(71) Anmelder: E.G.O. ELEKTRO-GERÄTEBAU GmbH, 75038 Oberderdingen (DE)
(72) Erfinder: Volker, Block, 75015 Bretten (DE)
(74) Vertreter: Patentanwälte Ruff, Beier, Schöndorf und Mütschele

(57) **Zusammenfassung**

Durch die Erfindung wird ein Wandungselement (14) für ein Behältnis (12) geschaffen, das aus zwei Metallschichten (15, 16) besteht. Davon trägt eine Schicht (16) ein Dickschichtelement (17) zur Beheizung des Behältnisses. Die andere Schicht (15) bildet eine Innenwandung des Behältnisses, und kann besondere Eigenschaften hinsichtlich Korrosionsbeständigkeit und Hygiene für das Behältnis aufweisen. Die Schichten können vorteilhaft durch Plattieren flächig verbunden werden.

Ein Anwendungsgebiet ist ein Wasserkocherboden für einen elektrisch beheizten Wasserkocher (11) mit einer Dickschichtheizung.

## Beschreibung

### ANWENDUNGSGEBIET UND STAND DER TECHNIK

Die vorliegende Erfindung betrifft ein Wandungselement zum Einbau in ein Behältnis, wobei das Wandungselement für eine Wechselwirkung, insbesondere Erwärmen, mit dem Behältnis und/oder dessen Inhalt ausgelegt ist.

Es ist schon eine Vielzahl von Wandungselementen vorgeschlagen worden, die bevorzugt in den Boden von Behältnissen eingebaut werden. Eine bevorzugte Anwendung ist die eines beheizbaren Bodens, mit dem der Inhalt des Behältnisses erwärmt werden kann. So können beispielsweise Wasserkocher aus zwei Teilen hergestellt werden. Der erste Teil, das Behältnis, wird häufig aus einem Kunststoff hergestellt. Als Boden wird eine im wesentlichen flache, runde Metallplatte eingesetzt, die auf ihrer Rückseite mit einer Beheizungsmöglichkeit versehen ist. Besonders verbreitet sind für diesen Zweck Rohrheizkörper, die auf verschiedene Weise einen gewissen Teil der Unterseite des Bodens bedeckend an dem Boden befestigt sind. Diese Art der Herstellung erfordert einen beträchtlichen Aufwand, da zuerst ein Rohrheizkörper gefertigt werden muß, der anschließend auf einen vorbehandelten Boden aufgebracht werden muß.

Es sind auch weitere Verfahren vorgeschlagen worden, verschiedenartige Heizelemente an einem Boden beispielsweise eines Wasserkochers anzubringen. Eines besteht darin, Dickschichtheizelemente zu verwenden. Diese können entweder auf ein Keramiksubstrat aufgebracht werden, das an einem für einen Boden geeignetem Material, meistens korrosionsbeständigem Edelstahl, aufwendig angebracht werden muß. Ein anderes Verfahren sieht vor, ein Dickschichtheizelement direkt auf ein für diese Technik geeignetes Material, beispielsweise einen Stahl, aufzutragen. Da ein solcher Stahl aber mit der Zeit zu korrodieren beginnt und die Innenseite der meisten Behältnisse besonderen hygienischen Anforderungen entsprechen muß, muß nachträglich eine Schutzschicht aufgebracht werden. Dazu können Glas-, Farb-, Teflon oder galvanisch aufgebrachte Schichten dienen. Diese Schichten sind jedoch meistens nicht in der Lage, alle im Alltagsbetrieb vorkommenden Beanspruchungen wie Überhitzung oder mechanisches oder chemisches Reinigen der Innenseite zu überstehen.

### AUFGABE UND LÖSUNG

Aufgabe der Erfindung ist es, ein Wandungselement zu schaffen, das die Nachteile des Standes der Technik vermeidet, zum Einbau in ein Behältnis und zum Hervorrufen einer Wechselwirkung mit diesem geeignet ist, den daraus resultierenden Anforderungen entspricht und kostengünstig hergestellt werden kann.

Diese Aufgabe wird dadurch gelöst, daß das Wandungselement aus mindestens zwei Schichten besteht, wobei eine einen flächigen Abschluß bildende Schicht ein Metall ist und mindestens ein Dickschichtelement zum Hervorrufen der Wechselwirkung trägt, und eine einen anderen flächigen Abschluß bildende Schicht ein Metall mit besonderen Eigenschaften, insbesondere hinsichtlich Korrosionsbeständigkeit und Hygiene, ist, wobei die Dicke wenigstens dieser beiden Schichten in derselben Größenordnung liegt. Auf diese Weise wird ein Wandungselement geschaffen, dessen Abschlußflächen verschiedene Eigenschaften aufweisen. Beide Abschlußflächen können unabhängig voneinander jeweils für ihren Verwendungszweck optimal geeignet sein.

In einer bevorzugten Ausgestaltung der Erfindung sind die wenigstens zwei Schichten flächig, insbesondere durch Plattieren, zu einer Baueinheit verbunden. Wenn das Wandungselement eine Baueinheit bildet, kann es besonders gut weiterverarbeitet werden und hält auch mechanischen Belastungen stand. Als Verfahren zum Verbinden der Schichten eignet sich Plattieren besonders gut, da große Mengen des Verbundmaterials hergestellt werden können. Dabei werden die einzelnen Schichten dauerhaft und unlösbar miteinander verbunden. Die Verbindung hält auch sehr hohen Temperaturen stand. Weitere Möglichkeiten zur Verbindung der Schichten sind beispielsweise Löten oder Verschweißen. Aus dem durch Plattieren entstandenen großflächigen Material können Wandungselemente in der gewünschten Form beispielsweise durch Stanzen herausgearbeitet werden.

Die Schicht, die das wenigstens eine Dickschichtelement trägt, kann ein Stahl sein, und die andere Schicht, die den anderen flächigen Abschluß bildet, kann ein behandelter und korrosionsbeständiger Edelstahl sein. Es können sich zwischen diesen beiden Schichten noch weitere Schichten befinden.

Bevorzugt ist die Schicht, die das wenigstens eine Dickschichtelement trägt, dicker, insbesondere etwa um den Faktor 2, als die Schicht, die den anderen flächigen Abschluß bildet. Da ein Stahl in der Herstellung billiger ist als ein Edelstahl, kann das Wandungselement kostengünstig hergestellt werden. Außerdem weist ein Stahl bessere Eigenschaften hinsichtlich Wärmeleitung und -verteilung auf, so daß der Wärmeübergang zwischen dem sogenannten Dickschichtstahl und dem Edelstahl gleichmäßig und auf eine große Fläche verteilt erfolgt. Die Dicke des Wandungselements kann etwa im Bereich von 0,5 bis 2 mm liegen.

Um den Herstellungs- und Materialaufwand zu reduzieren, kann das Wandungselement aus zwei Schichten bestehen. Dabei ist die eine Schicht ein Dickschichtstahl und die andere Schicht ein Edelstahl. Zwischenschichten sind hier keine vorgesehen.

Ein bevorzugtes Einsatzgebiet ist der Einbau in ein Behältnis zum Erwärmen von Flüssigkeiten, insbesondere von Wasser, wobei die Schicht aus Stahl wenigstens ein Dickschichtheizelement trägt. Hier bietet sich vor allem der Einsatz in Wasserkochern an, die ein Behältnis aus Kunststoff aufweisen, das bodenseitig nicht verschlossen ist. In diese Öffnung wird ein erfindungsgemäßes Wandungselement, bevorzugt in Form einer runden Scheibe, eingesetzt. Die mit dem Wasser in Berührung kommende Seite des Wandungselementes besteht aus Edelstahl und ist demzufolge beständig gegen Korrosion. Auf der anderen Seite befindet sich das Dickschichtheizelement, mit dem der Inhalt des Wasserkochers erwärmt werden kann. Das Behältnis kann aber genauso gut aus einem anderen Material, beispielsweise Metall oder Glas gefertigt sein. Neben dem Dickschichtheizelement können noch weitere Elemente auf dem Dickschichtstahl angebracht und/oder anbringbar sein. Das können ebenfalls Elemente sein, die durch ein Dickschichtverfahren hergestellt werden. Bevorzugt sind Temperaturfühler o.dgl. vorgesehen.

Für den Einsatz in beliebigen Behältern kann das Wandungselement beliebig geformt sein. Selbst nach dem flächigen Verbinden der Schichten kann es in gewissen Grenzen verformt werden, so daß Biegungen und Wölbungen möglich sind. Ein weiteres Anwendungsgebiet kann im Bereich der Chemie liegen. Um bestimmte Chemikalien erwärmen zu können, die u.U. sehr aggressiv sein können, muß die Metallschicht, die die Innenseite eines Behälters bildet, beständig gegen diese Chemikalien sein.

Der bei einem Verbundelement aus Metall auftretende Bimetalleffekt wird dadurch in Grenzen gehalten, daß das Wandungselement durch seine relativ geringe Dicke keine bedeutenden Temperaturunterschiede aufweist. Des weiteren wird durch den Inhalt des Behältnisses, der mit der Edelstahlseite, die den geringeren Ausdehnungskoeffizienten besitzt, in direktem Kontakt steht, eine gute Wärmeabnahme gewährleistet. Es kann vorgesehen sein, das Wandungselement beispielsweise durch Bombieren derart vorzuformen, daß es bei einer Erwärmung eine flache Form annimmt.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränken die unter diesen jeweils gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: einen Längsschnitt durch ein Behältnis mit einem als Boden eingesetzten erfindungsgemäßen Wandungselement und
- Fig. 2: eine Ansicht des Wandungselements von unten mit einer sternförmigen Anordnung von Dickschichtheizelementen.

### BESCHREIBUNG EINES BEVORZUGTEN AUSFÜHRUNGSBEISPIELS

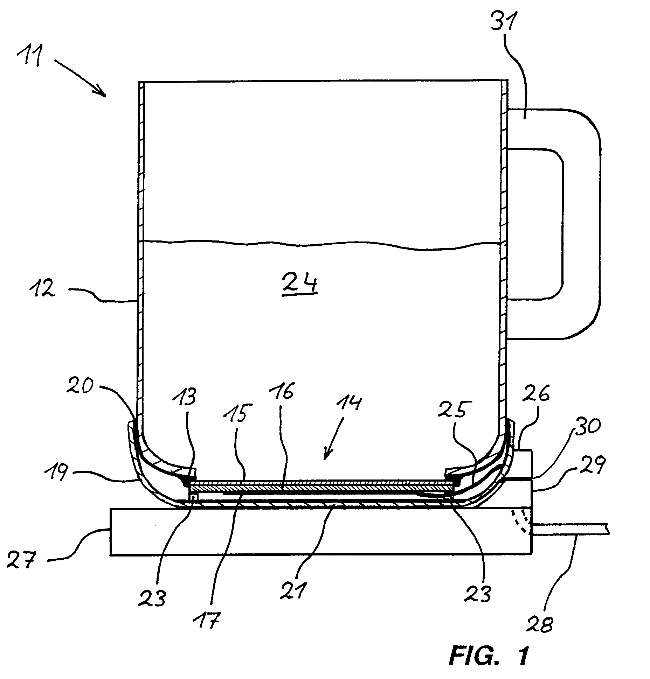

In der Fig. 1 ist ein Schnitt durch einen Wasserkocher 11 dargestellt. Er besteht im wesentlichen aus einem größtenteils zylindrischen Behälter 12, der eine Wandung aufweist, die zum Abschluß des Behälters 12 nach unten in einem engen Radius nach innen gezogen ist. Den Abschluß der Wandung nach innen bildet ein ringförmig umlaufender Absatz 13, der anstelle eines Bodens eine kreisrunde Öffnung bildet.

In die von dem Absatz 13 gebildete Öffnung ist ein erfindungsgemäßes Wandungselement 14 eingesetzt, das einen den Behälter 12 nach unten abschließenden Boden bildet. Das Wandungselement 14 besteht auf der zur Innenseite des Behälters 12 weisenden Seite aus einer Edelstahlscheibe 15. Diese Edelstahlscheibe 15 ist flächig mit einer zweiten Scheibe 16 zu einer Baueinheit verbunden. Diese zweite Scheibe 16 besteht aus einem sogenannten Dickschichtstahl. Das bedeutet, daß sich diese Stahlsorte für Verfahren zur Aufbringung von Dickschichten eignet. Auf der von dem Behälter 12 abgewandten Seite des Wandungselements 14 ist ein Dickschichtheizelement 17 aufgebracht. Es wird von der zweiten Scheibe 16, die aus dem Dickschichtstahl gefertigt ist, getragen.

Wie man in der Zeichnung erkennen kann, und schon oben erwähnt wurde, bildet das Wandungselement 14 den Boden des zylindrischen Behälters 12 und verschließt diesen nach unten. Zu diesem Zweck muß die Verbindung zwischen dem Absatz 13 und dem Wandungselement 14 dichtend ausgeführt sein. Dazu kann das Wandungselement 14 beispielsweise mit einem Kleber oder einem Dichtungsring in die von dem Absatz 13 gebildete Öffnung eingesetzt werden. Die für diesen Anwendungszweck benötigte Temperaturfestigkeit weist beispielsweise ein Silikonkleber auf.

Um das Wandungselement 14 nach unten hin abzudecken, ist an dem unteren Teil des zylindrischen Behälters eine Bodenschale 19 angebracht. Diese Bodenschale 19 ist längs einer ringförmig umlaufenden Kontaktzone 20 mit dem zylindrischen Behälter 12 verbunden. Dabei überlappt sie den Behälter 12 im Bereich der Kontaktzone 20. Die Verbindung geschieht beispielsweise durch Verkleben oder Verschweißen. Die Kontaktzone 20 befindet sich etwas oberhalb der Stelle, an der die Wandung des zylindrischen Behälters 12 sich nach innen verjüngt. Die Bodenschale 19 ist ebenfalls etwas unterhalb der Kontaktzone 20 nach innen verjüngend zusammengezogen, und bildet eine geschlossene, im wesentlichen flache Bodenplatte 21. Da der Radius, mit dem die Bodenschale 19 nach innen gezogen ist, größer ist als der, mit dem die Wandung des Behälters 12 nach innen gezogen ist, befindet sich der Absatz 13 in einem gewissen Abstand über der Bodenplatte 21. Auch das Dickschichtheizelement 17 weist einen gewissen Abstand zu der Bodenplatte 21 auf, der beispielsweise mit einem wärmedämmenden Material gefüllt sein kann. Um das Wandungselement 14 auch nach unten abzustützen, ist an der Bodenplatte 21 beispielsweise ein ringförmig umlaufender Stützwulst 23 angeformt oder nachträglich anmontiert, auf dem das Wandungselement 14 in seinem äußeren Bereich aufliegt.

Über eine nur schematisch dargestellte Anschlußleitung 25 ist das Dickschichtheizelement 17 mit einem auf der Außenseite der Bodenschale 19 angebrachten Kontaktgehäuse 26 verbunden. Dieses Kontaktgehäuse 26 weist auf seiner Unterseite nicht näher beschriebene Kontakte auf, über die das Dickschichtheizelement mit elektrischer Energie versorgt wird. Im Betrieb kann der Wasserkocher 11 auf einer Versorgungsstation 27 abgestellt sein, die ein Stromanschlußkabel 28 aufweist. Das Stromanschlußkabel 28 ist innerhalb der Versorgungsstation 27 in ein Kontaktstiftgehäuse 29 geführt, wo es auf nicht näher beschriebene Weise bevorzugt an nach oben reichende Kontaktstifte angeschlossen wird. Wird der Behälter 12 so auf die Versorgungsstation 27 gestellt, daß das Kontaktgehäuse 26 an einer Kontaktstelle 30 auf dem Kontaktstiftgehäuse 29 zu liegen kommt, schließen sich die Kontakte und durch das Dickschichtheizelement 17 kann ein Strom fließen. Wird der Behälter 12 mit einem seitlich daran angebrachten Handgriff 31 von der Versorgungsstation 27 abgehoben, so öffnen sich die Kontakte an der Kontaktstelle 30 und die Stromversorgung des Dickschichtheizelements 17 wird unterbrochen. Auf diese Weise kann der Behälter 12 ohne störende Anschlußkabel frei bewegt werden.

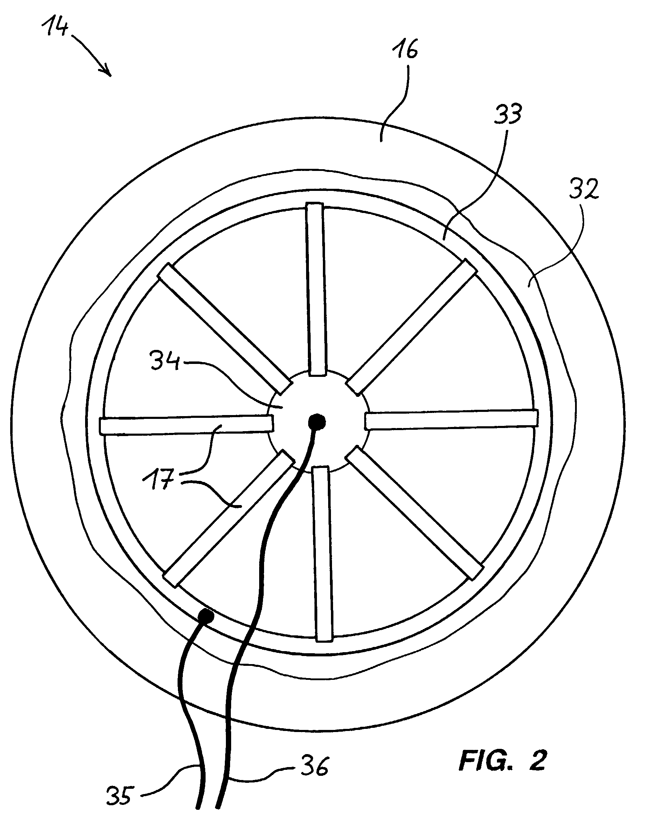

Eine Ansicht der Unterseite des Wandungselements 14 ist in der Fig. 2 zu sehen. Auf der zweiten Scheibe 16, die aus Dickschichtstahl besteht, ist auf einer etwa kreisförmig flächig aufgetragenen Isolationsschicht 32 ein ringförmiger Kontaktstreifen 33 aufgebracht. Er kann im Dickschichtverfahren auf die zweite Scheibe 16 bzw. die Isolationsschicht 32 aufgebracht werden, besteht vorzugsweise aus einem besonders leitfähigen Material bzw. Metall und wird durch die Isolationsschicht 32 elektrisch gegen die Scheibe 16 isoliert. Im Mittelpunkt des ringförmigen Kontaktstreifens 33 ist eine Kontaktscheibe 34 auf die zweite Scheibe 16 aufgebracht, die aus demselben Material wie der ringförmige Kontaktstreifen 33 besteht und ebenso durch die Isolationsschicht 32 gegen die Scheibe isoliert ist. Von der Kontaktscheibe 34 verlaufen auf der Isolationsschicht in radialer Richtung streifenförmige Dickschichtwiderstände 17 zu dem ringförmigen Kontaktstreifen 33. Dabei überlappen die Dickschichtwiderstände 17 zur Herstellung eines Kontakts sowohl die Kontaktscheibe 34 als auch den ringförmigen Kontaktstreifen 33 um ein kleines Stück. Die Dickschichtwiderstände 17 bestehen aus einem für diese Zwecke geeigneten Widerstandsmaterial, das in einem Dickschichtverfahren nach den Kontakten 33 und 34 auf die Isolationsschicht der zweiten Scheibe 16 aufgebracht wird.

Ein erster Anschluß 35, hier als Anschlußlitze ausgeführt, ist mit dem ringförmigen Kontaktstreifen 33 elektrisch verbunden. Ein ähnlicher zweiter Anschluß 36 ist ebenfalls mit der Kontaktscheibe 34 elektrisch verbunden. Wird nun an die beiden Anschlüsse 35 und 36 die Versorgungsspannung angelegt, so liegt an allen Dickschichtwiderständen 17 dieselbe Spannung an. Wenn sie, wie in der Fig. 2 dargestellt, dieselbe Geometrie aufweisen, so fließt durch jeden Dickschichtwiderstand 17 derselbe Strom. Damit ist die Wärmeentwicklung in allen Dickschichtwiderständen 17 gleich.

Der Gestaltungsspielraum für das Dickschichtheizelement 17 ist sehr groß, und durch die Kombination der Widerstandsform und der -anordnung mit der Fläche kann eine gleichförmige Wärmeverteilung erzielt werden. Je nach gewünschter Anwendung können beliebige Formen auf die zweite Scheibe 16 aufgebracht werden. Durch eine Vielzahl von zur Verfügung stehenden Widerstandspasten, aus denen das Dickschichtheizelement 17 durch Einbrennen bei hohen Temperaturen entsteht, steht ein weiter Gestaltungsspielraum zur Verfügung. Die durch Plattieren der beiden Schichten 16 und 17 entstandene Verbindung hält auch den dabei notwendigen hohen Temperaturen stand.

Die Anschlüsse 35 und 36 bilden die Anschlußleitung 25, mit der das Dickschichtheizelement 17 an das Kontaktgehäuse 26 und damit im Betrieb an das Stromanschlußkabel 28 angeschlossen ist.

## Patentansprüche

1. Wandungselement (14) zum Einbau in ein Behältnis (12), wobei das Wandungselement (14) für eine Wechselwirkung, insbesondere Erwärmen, mit dem Behältnis (12) und/oder einem Inhalt ausgelegt ist, dadurch gekennzeichnet, daß das Wandungselement (14) aus mindestens zwei Schichten (15,16) besteht, wobei eine einen flächigen Abschluß bildende Schicht (16) ein Metall ist und mindestens ein Dickschichtelement (17) zum Hervorrufen der Wechselwirkung trägt, und eine einen anderen flächigen Abschluß bildende Schicht (15) ein Metall mit besonderen Eigenschaften, insbesondere hinsichtlich Korrosionsbeständigkeit und Hygiene, ist, wobei die Dicke wenigstens dieser beiden Schichten (15, 16) in derselben Größenordnung liegt.

2. Wandungselement nach Anspruch 1, dadurch gekennzeichnet, daß die wenigstens zwei Schichten (15,16) flächig, insbesondere durch Plattieren, zu einer Baueinheit miteinander verbunden sind.

3. Wandungselement nach Anspruch 1 oder 2, dadurch gekennzeichnet, daß die Schicht (16), die das wenigstens eine Dickschichtelement (17) trägt, ein Stahl ist, und die andere Schicht (15), die den anderen flächigen Abschluß bildet, ein behandelter und korrosionsbeständiger Edelstahl ist.

4. Wandungselement nach einem der vorhergehenden Ansprüche, dadurch gekennzeichnet, daß die Schicht (16), die das wenigstens eine Dickschichtelement (17) trägt, dicker ist, insbesondere etwa um den Faktor 2, als die Schicht (15), die den anderen flächigen Abschluß bildet.

5. Wandungselement nach einem der vorhergehenden Ansprüche, dadurch gekennzeichnet, daß das Wandungselement (14) aus zwei Schichten (15,16) besteht.

6. Wandungselement nach einem der vorhergehenden Ansprüche, dadurch gekennzeichnet, daß es zum Einbau in ein Behältnis (12) zum Erwärmen von Flüssigkeiten (24), insbesondere von Wasser, ausgelegt ist, wobei die Schicht (16) aus Stahl wenigstens ein Dickschichtheizelement (17) trägt.
